# EUROPEAN PATENT APPLICATION

(11) **EP 4 786 710 A1**
(43) Date of publication of application: **05.08.2026**
(21) Application number: 25743248.4
(22) Date of filing: 29.04.2025
(51) Int. Cl.: E04H 12/24, E04H 12/00, H02G 7/20, H01B 17/16, H02G 7/05

(54) **COMPOSITE CROSS ARM AND POWER TRANSMISSION TOWER**

(30) Priority: 22.11.2024 CN 202411686622
(71) Applicant: Jiangsu Shemar Electric Co., Ltd., Nantong City, Jiangsu 226017 (CN)
(72) Inventor: DE SANTOS YUBERO, Héctor, Nantong, Jiangsu 226017 (CN); GU, Yanan, Nantong, Jiangsu 226017 (CN); HUANG, Qing, Nantong, Jiangsu 226017 (CN); XIA, Fa, Nantong, Jiangsu 226017 (CN); SHI, Jiafeng, Nantong, Jiangsu 226017 (CN)
(74) Representative: HGF
(86) International application number: PCT/CN2025/092007
(87) International publication number: WO 2026/108095

(57) **Abstract**

The present application discloses a composite crossarm, including: a first crossarm being of an inverted V-shaped structure, and the top and two ends of the first crossarm being respectively configured to attach conductors; two second crossarms, each of which has one end connected to the middle portion of the first crossarm, another end configured to be connected to an electric pole, a length direction of each of the second crossarms being obliquely arranged, the second crossarms being arranged below the first crossarm, and the second crossarms and the first crossarm being located in a same vertical plane; and two connecting fittings, the other ends of the two second crossarms being connected to two sides of the electric pole through the two connecting fittings respectively. The composite crossarm according to the present application has a fully insulated structure, raises an overall attaching height of the conductor via the second crossarm, which can effectively prevent accidents such as tripping caused by an electric shock to birds, and has higher safety and lower operation and maintenance costs. The present application further discloses a power transmission pole.

## Description

### TECHNICAL FIELD

The present application relates to the field of overhead power transmission line technologies, and in particular, to a composite crossarm and a power transmission pole.

### BACKGROUND

A crossarm is an assembly in an overhead line mounted on an electric pole and has a main function of supporting a conductor. A steel crossarm is adopted in a conventional power transmission pole, and an insulator is mounted on the steel crossarm to attach the conductor. When the conductor is a bare conductor, when taking off from or landing on the power transmission pole, birds may simultaneously contact any two conductors or any conductor and the steel crossarm to form an energized circuit to cause an electric shock, which may directly affect the normal operation of power infrastructure, resulting in accidents such as tripping, while also causing deaths of the birds and reducing biodiversity.

Currently, an insulating sheath is usually mounted on an outer periphery of the bare conductor adjacent to the electric pole to protect the birds from being electrically shocked, but such a protective mode is expensive and has poor long-term effectiveness in use, requiring regular replacement and maintenance, resulting in high operation and maintenance costs.

### SUMMARY

As for the defects of the prior art, an object of the present application is to provide a composite crossarm, which has a fully insulated structure, raises an overall attaching height of conductors by means of second crossarms, and can effectively prevent accidents such as tripping caused by an electric shock to birds, and has higher safety and lower operation and maintenance costs.

In order to achieve the above object, the following technical solution is adopted in the present application: a composite crossarm includes: a first crossarm, the first crossarm being of an inverted V-shaped structure, and a top and two ends of the first crossarm being respectively configured to attach conductors; two second crossarms, each of which has one end respectively connected to a middle portion of the first crossarm, and the other end configured to be connected to an electric pole, a length direction of each of the second crossarms being obliquely arranged, the second crossarms being arranged below the first crossarm, and the second crossarms and the first crossarm being located in a same vertical plane; and two connecting fittings, the other ends of the two second crossarms being connected to two sides of the electric pole through the two connecting fittings respectively.

In an embodiment, the first crossarm includes: two first core rods arranged at an included angle; two first intermediate fittings respectively connected to the two second crossarms and middle portions of the two first core rods; a second intermediate fitting, one end of each of the two first core rods being respectively connected to one of two sides of the second intermediate fitting, and the second intermediate fitting being configured to attach the conductor; two end fittings, each of which being connected to the other end of one of the two first core rods, and the end fittings being configured to attach the conductors; and a first insulating layer covering at least a part of an outer periphery surface of each of the first core rods.

In an embodiment, each of the first intermediate fittings includes: a first intermediate sleeve sleeved on the middle portion of the first core rod; and a first intermediate connecting portion arranged on a bottom surface of the first intermediate sleeve, and the first intermediate connecting portion being configured to be connected to the second crossarm.

In an embodiment, the second intermediate fitting includes: a top connecting portion provided with a first attaching portion, and the first attaching portion being configured to attach the conductor through a clamp; and two second intermediate sleeves, each of which being sleeved on one end of one of the two first core rods, and the two second intermediate sleeves being respectively connected to two ends of the top connecting portion.

In an embodiment, the top connecting portion and the two second intermediate sleeves are of an integral structure.

In an embodiment, the top connecting portion is detachably connected to each of the second intermediate sleeves through a second intermediate connecting portion. The second intermediate connecting portion is arranged at an end of the second intermediate sleeve not connected to the first core rod; and the top connecting portion includes two top connecting plates, the two top connecting plates clamping and fixing the two second intermediate connecting portions, and at least one of the top connecting plates being provided with the first attaching portion.

In an embodiment, each of the end fittings includes an end sleeve and a second attaching portion that are connected to each other. The end sleeve is configured to be connected to the other end of the first core rod, and the second attaching portion being configured to attach the conductor.

In an embodiment, the second attaching portion includes an end plate and a wire attaching plate. The end plate seals an end portion of the end sleeve not connected to the first core rod. The wire attaching plate obliquely extends outwardly from a side of the end plate away from the end sleeve. A sectional size of an end of the end sleeve connected to the end plate is gradually reduced from an end portion of the first core rod towards the end plate.

In an embodiment, each of the second crossarms includes: a second core rod; a first fitting connected to one end of the second core rod and the middle portion of the first crossarm; a second fitting connected to the other end of the second core rod and the connecting fitting; and a second insulating layer covering at least a part of an outer periphery surface of the second core rod.

In an embodiment, each of the connecting fittings includes an electric pole connecting portion and a crossarm connecting portion that are connected to each other. The electric pole connecting portion is connected to the electric pole, and the crossarm connecting portion is connected to the other end of the second crossarm.

In an embodiment, the electric pole connecting portion includes a first plate member abutting against and being fixed on the electric pole; and the crossarm connecting portion includes two second plate members, the two second plate members being perpendicularly connected to two ends of the first plate member respectively. The two second plate members extend from the two ends of the first plate member in a same direction away from the first plate member. Each of the second plate members is provided with a fixing hole configured for fixedly connecting the connecting fitting to the second crossarm.

In an embodiment, each of the second plate members is further provided with an adjusting hole. The fixing hole and the adjusting hole cooperate to cause an angle between the second crossarm and the electric pole to be adjustable. The fixing hole is a circular through hole, the adjusting hole is an arc-shaped hole, and an arc of the adjusting hole and the fixing hole are arranged concentrically.

In an embodiment, the electric pole connecting portion further includes a third plate member configured to be in matched connection with the electric pole. Each of two ends of the third plate member is connected to the other end of one of the two second plate members not connected to the first plate member. A length of the third plate member along a length direction of the electric pole is less than a length of each of the second plate members.

In an embodiment, the second intermediate fitting further includes two tension connecting portions. The two tension connecting portions are arranged on a top side of the top connecting portion and symmetrical with respect to a vertical plane where the first crossarm is located, and the tension connecting portions are configured to be connected to tension assemblies.

In an embodiment, the composite crossarm further includes an insulating protection cover, the insulating protection cover including connecting fitting protection covers and an electric pole protection cover. The connecting fitting protection cover is configured to cover the connecting fittings, and the electric pole protection cover is configured to cover a top of the electric pole.

A second object of the present application is to provide a power transmission pole, including an electric pole and the composite crossarm as described above. The composite crossarm is fixed on the electric pole.

The present application has the following beneficial effects: different from the prior art, the composite crossarm according to the present application includes the first crossarm, the two second crossarms, and the connecting fittings, and the overall composite crossarm has the fully insulated structure, the overall attaching height of the conductors is raised by means of the second crossarms, so that an insulation distance between the conductor at a high-voltage end and the top of the electric pole at a low-voltage end of the power transmission pole. As such, an energized circuit cannot be formed no matter where birds take off, stand, or land on the power transmission pole, the accidents such as the tripping caused by the electric shock to the birds are effectively prevented, the safety is higher, the operation and maintenance costs are lower, and meanwhile, the probability of electric shock death when the birds land on the power transmission pole can be effectively reduced, protecting biodiversity.

Meanwhile, in the present application, the second crossarm and the electric pole are connected through the adjustable connecting fitting, so that the angle between the second crossarm and the electric pole can be adjusted according to design requirements, the mounting is flexible, and the connection is reliable; and an independent structure of the fitting enables the fitting to be suitable for mounting composite crossarms with different length specifications, and an application range is wider.

In addition, compared with a conventional steel crossarm, by directly attaching the conductors using the composite crossarm, a suspension insulator structure can be omitted, and the crossarm is simpler in structure, more convenient to mount, less prone to corrosion and longer in service life; and each insulating layer is made of high-temperature vulcanized silicone rubber and has good aging resistance and hydrophobic migration property, a pollution flashover probability and a rain flashover probability can be reduced, and electrical safety of the composite crossarm is improved.

### BRIEF DESCRIPTION OF THE DRAWINGS

FIG. 1 is a schematic structural view of a power transmission pole 1000 in an embodiment of the present application;
FIG. 2 is a schematic structural view of a first crossarm 100 in an embodiment of the present application;
FIG. 3 is a schematic enlarged view of a partial structure in which a first intermediate fitting 120 is fixed on a first core rod 110 in an embodiment of the present application;
FIG. 4 is a schematic enlarged view of portion A in FIG. 2;
FIG. 5 is a schematic view of a wire attaching structure of a second intermediate fitting 130 in an embodiment of the present application;
FIG. 6 is a schematic enlarged view of portion B in FIG. 2;
FIG. 7 is a schematic partial structural view of the first crossarm 100 in an embodiment of the present application;
FIG. 8 is a schematic view of a wire attaching structure of an end fitting 140 in an embodiment of the present application;
FIG. 9 is a schematic structural view of an end fitting 140 in another embodiment of the present application;
FIG. 10 is a schematic structural view of a second crossarm 200 in an embodiment of the present application;
FIG. 11 is a schematic structural view of a connecting fitting 300 in an embodiment of the present application;
FIG. 12 is a schematic structural view of a connecting fitting 300 in another embodiment of the present application;
FIG. 13 is a schematic structural view of a power transmission pole 2000 in another embodiment of the present application;
FIG. 14 is a schematic partial structural view of a power transmission pole 2000 in still another embodiment of the present application;
FIG. 15 is a schematic structural view of a power transmission pole 2000 in another embodiment of the present application;
FIG. 16 is a schematic partial structural view of a power transmission pole 1000 in still another embodiment of the present application.

### DETAILED DESCRIPTION

As required, detailed embodiments of the present application will be disclosed herein. However, it is to be understood that the disclosed embodiments are merely exemplary examples of the present application, and may be embodied in various forms. Therefore, specific details disclosed herein are not to be interpreted as limiting, but merely as a basis for the claims and as a representative basis for teaching those skilled in the art to variously apply the present application in virtually any appropriate manner, including employing various features disclosed herein and combining with other features that may not be explicitly disclosed herein.

The term "connection" as used herein, unless otherwise expressly specified or limited, is to be construed broadly, and can be either direct connection or connection through an intermediate medium. In descriptions of the present application, it should be understood that directions or positional relationships indicated by terms "upper", "lower", "end portion", "an end", etc. are based on orientations or positional relationships shown in the accompanying drawings, and they are used only for describing the present application and for description simplicity, but do not indicate or imply that an indicated device or element must have a specific orientation or be constructed and operated in a specific orientation. Therefore, it cannot be understood as a limitation on the present application.

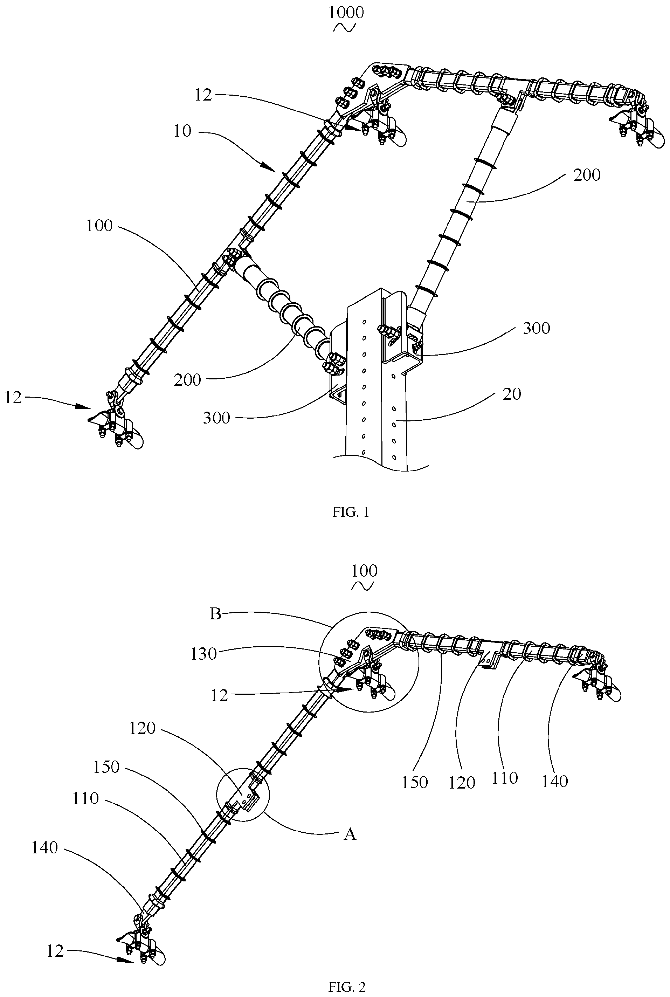

In an application scenario, as shown in FIG. 1, the present application provides a power transmission pole 1000, the power transmission pole 1000 is an intermediate pole, the intermediate pole includes a composite crossarm 10 and an electric pole 20. The composite crossarm 10 is fixed on the electric pole 20. In an electrical power system, the intermediate pole refers to a support in a line configured to support conductors.

The composite crossarm 10 includes a first crossarm 100, two second crossarms 200, and two connecting fittings 300. The first crossarm 100 is of an inverted V-shaped structure, and the top and two ends of the first crossarm 100 are respectively configured to attach conductors; the two second crossarms 200 are respectively connected to two opposite sides of the electric pole 20 and form a V-shaped structure. An end of each of the two second crossarms 200 is respectively connected to the middle portion of the first crossarm 100, the other ends of the two second crossarms 200 are respectively connected to the two sides of the electric pole 20 through the two connecting fittings 300. A length direction of each of the second crossarms 200 is obliquely arranged, the second crossarms 200 are arranged below the first crossarm 100, and the second crossarms 200 and the first crossarm 100 are located in a same vertical plane.

In the power transmission pole 1000 according to the present application, the composite crossarm 10 is used to attach the conductors, the whole composite crossarm 10 has a fully insulated structure, an overall attaching height of the conductors is raised by means of the second crossarms 200, and an insulation distance between the conductor at a high-voltage end and the top of the electric pole 20 at a low-voltage end of the power transmission pole 1000 is increased, so that an energized circuit cannot be formed no matter where birds take off, stand, or land on the power transmission pole 1000, accidents such as tripping caused by an electric shock to the birds are effectively prevented, safety is higher, operation and maintenance costs are lower, and meanwhile, the probability of electric shock death when the birds land on the power transmission pole 1000 can be effectively reduced, which protects biodiversity. In a conventional solution, in the intermediate pole, a suspension insulator is arranged on a steel crossarm to attach the conductor, and compared with the conventional steel crossarm, in the present application, by directly attaching the conductor by using the composite crossarm 10, the suspension insulator structure can be omitted, and the crossarm is simpler in structure, more convenient to be mounted, less prone to corrosion and longer in service life.

It should be noted that, unless particularly specified, the middle portion as used in this application refers to the part between the two ends, and is not strictly the central part.

As shown in FIG. 2 together, the first crossarm 100 includes two first core rods 110 (the reference numeral in figures is only for illustration), two first intermediate fittings 120, a second intermediate fitting 130, two end fittings 140, and a first insulating layer 150. The two first core rods 110 are arranged at an included angle; each of the two first intermediate fittings 120 is connected to one end of one of the two second crossarms 200 and the middle portion of one of the two first core rods 110; one end of each of the two first core rods 110 is connected to one of two sides of the second intermediate fitting 130, and the second intermediate fitting 130 is configured to attach the conductor; the two end fittings 140 are respectively connected to the other ends of the two first core rods 110, and the end fittings 140 are configured to attach the conductors; and the first insulating layer 150 covers at least a part of an outer periphery surface of the first core rods 110.

The two first core rods 110 are arranged at the included angle, that is, the two first core rods 110 are both obliquely arranged downwards, and axis extension lines of the two first core rods 110 intersect with each other, so that the first crossarm 100 can form an inverted V-shaped structure, so as to attach three-phase conductors.

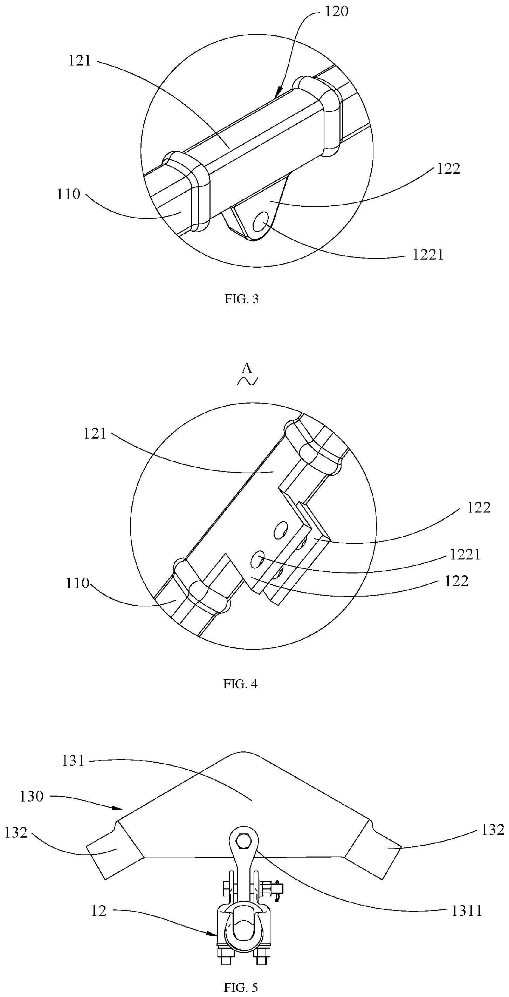

As shown in FIG. 3 and FIG. 4 together, the first intermediate fitting 120 includes a first intermediate sleeve 121 and a first intermediate connecting portion 122. The first intermediate sleeve 121 is sleeved on the middle portion of the first core rod 110, and specifically, the first intermediate sleeve 121 is sleeved on an outer periphery of the first core rod 110, and the first intermediate sleeve 121 is fixed on the first core rod 110 by a crimping process; and a side of the first intermediate sleeve 121 closest to the second crossarm 200 is defined as a bottom surface, the first intermediate connecting portion 122 is arranged on the bottom surface of the first intermediate sleeve 121, and the first intermediate connecting portion 122 is configured to be connected to the second crossarm 200.

The first intermediate sleeve 121 is of a hollow tubular structure, and a shape and size of a cross-section of the first intermediate sleeve 121 are matched with those of a cross-section of the first core rod 110, so that the first intermediate sleeve 121 can be sleeved on and be fixed on the outer periphery of the first core rod 110, a contact area between the first intermediate sleeve 121 and the first core rod 110 is increased, and connecting strength between the first intermediate sleeve 121 and the first core rod 110 is ensured.

The first intermediate connecting portion 122 is of a plate-shaped structure and is perpendicularly connected to the bottom surface of the first intermediate sleeve 121, and the first intermediate connecting portion 122 is located in the middle portion of the first intermediate sleeve 121, so that the second crossarm 200 is stressed more uniformly after being mounted subsequently; and the first intermediate connecting portion 122 is provided with a first connecting hole 1221 configured for matched connection to the second crossarm 200 through fasteners such as bolts and screws, that is, there is no need to drill holes on the first intermediate sleeve 121 and the first core rod 110 for connection, thus avoiding the mechanical properties of the core rod 110 from being affected by drilling holes, thereby avoiding potential electric-power safety hazards.

In an embodiment, as shown in FIG. 3, one first intermediate connecting portion 122 may be provided. A plate surface direction of the first intermediate connecting portion 122 is arranged in an axial direction of the first intermediate sleeve 121, and a penetrating direction of the first connecting hole 1221 is perpendicular to the axial direction of the first intermediate sleeve 121, so that after the first intermediate fitting 120 is fixed on the first core rod 110, the plate surface direction of the first intermediate connecting portion 122 and a length direction of the first crossarm 100 are located in a same vertical plane, which facilitates assembly of the first crossarm 100 and the second crossarm 200.

In another embodiment, as shown in FIG. 4, two first intermediate connecting portions 122 may be provided. The two first intermediate connecting portions 122 are spaced apart on the two side edges of the bottom surface of the first intermediate sleeve 121, so that the two first intermediate connecting portions 122 can be in matched connection with the second crossarm 200 in a fixed clamping mode, and connecting strength between the first crossarm 100 and the second crossarm 200 is further improved without affecting the mechanical properties of the first core rod 110.

The number and specific arrangement of the first intermediate connecting portions 122 may be also in other forms as long as they can be in matched connection with the second crossarm 200, and which are not limited herein.

As shown in FIG. 5 to FIG. 7 together, the second intermediate fitting 130 includes a top connecting portion 131 and two second intermediate sleeves 132 respectively connected to two ends of the top connecting portion 131. The top connecting portion 131 is provided with a first attaching portion 1311, and the first attaching portion 1311 is configured to attach the conductor through a clamp; and each of the two second intermediate sleeves 132 is sleeved on one end of one of the two first core rods 110. The second intermediate sleeve 132 is of a tubular structure with a closed end, the closed end is connected to the top connecting portion 131, an open end is sleeved on the one end of the first core rod 110. In addition, a shape and size of a cross-section of the second intermediate sleeve 132 are matched with those of the cross-section of the first core rod 110.

In an embodiment, as shown in FIG. 5, the top connecting portion 131 and the two second intermediate sleeves 132 are of an integral structure. The top connecting portion 131 is of a plate-shaped structure. The two second intermediate sleeves 132 are directly fixed on two sides of the top connecting portion 131, respectively, and the axes of the two second intermediate sleeves 132 are arranged at an included angle. As such, when the first core rods 110 are crimped in the second intermediate sleeves 132, respectively, the two first core rods 110 can directly form the inverted V-shaped structure, mounting operation is simple, and efficiency is high; the first attaching portion 1311 is arranged at the middle portion of a bottom side of the top connecting portion 131.

The first attaching portion 1311 can be a wire attaching plate, that is, the wire attaching plate extends outwardly from the middle portion of the bottom side of the top connecting portion 131 in a plate surface direction of the top connecting portion 131. The wire attaching plate is provided with an attaching hole which is configured for the mounting of a suspension clamp 12 through an assembly such as a shackle to attach the conductor. When being mounted, the conductor is first fixed on the suspension clamp 12, the suspension clamp 12 and the shackle are then assembled, the shackle is then clamped on two sides of the wire attaching plate. After a mounting hole on the shackle is aligned with the attaching hole, fasteners such as bolts and screws are inserted in the mounting hole and the attaching hole to attach the suspension clamp 12 on the attaching hole, thereby stably attaching the conductor on the second intermediate fitting 130. A width of the wire attaching plate along the conductor extension direction is less than a width of the top connecting portion 131, which can reduce the weight of the top connecting portion 131, and reduce costs while ensuring the wire attaching effect.

As shown in FIG. 5 together, the first attaching portion 1311 may also be an attaching hole arranged at the middle portion of the bottom side of the top connecting portion 131, and the suspension clamp 12 is directly attached to the attaching hole to attach the conductor, so that the weight of the top connecting portion 131 can be further reduced, reducing the cost. The suspension clamp 12 is of a clamp structure in the prior art, and which is not limited herein.

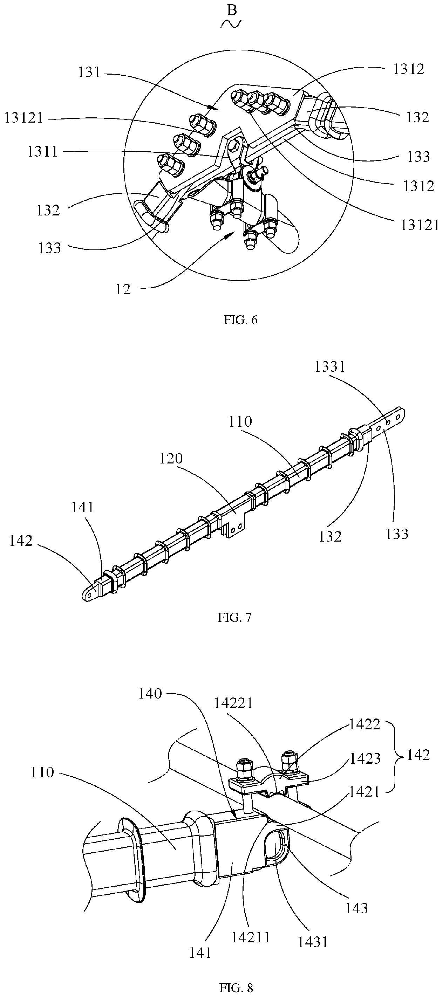

In another embodiment, as shown in FIG. 6 and FIG. 7 together, in order to make assembly of the first crossarm 100 more flexible, the top connecting portion 131 and the second intermediate sleeve 132 are detachably connected by a second intermediate connecting portion 133.

The second intermediate connecting portion 133 is arranged at the end of the second intermediate sleeve 132 not connected to the first core rod 110. The second intermediate connecting portion 133 is of a plate member structure, a plate surface of the second intermediate connecting portion 133 is arranged in an axial direction of the second intermediate sleeve 132. A group of a plurality of second connecting holes 1331 are arranged on the second intermediate connecting portion 133, a penetrating direction of each of the second connecting holes 1331 is perpendicular to a plate surface direction of the second intermediate connecting portion 133, and the second connecting holes 1331 are configured to be in matched connection with the top connecting portion 131. A width of the second intermediate connecting portion 133 in the conductor extension direction is less than a width of the second intermediate sleeve 132, which can reduce the weight of the second intermediate fitting 130, and reduce costs while ensuring the connecting strength.

The top connecting portion 131 includes two top connecting plates 1312, and the two top connecting plates 1312 clamp and fix the two second intermediate connecting portions 133, so as to effectively ensure connecting strength between them, and thus ensure overall mechanical strength of the first crossarm 100. The two top connecting plates 1312 are correspondingly provided with two groups of top connecting holes 13121. The two groups of top connecting holes 13121 are respectively located on two sides of the top connecting plates 1312, penetrating directions of the top connecting holes 13121 are perpendicular to plate surfaces of the top connecting plates 1312. The number and positions of each group of top connecting holes 13121 are matched with those of the corresponding group of second connecting holes 1331. On each top connecting plate 1312, centers of each group of top connecting holes 13121 are located on a same straight line, connecting lines of the centers of the two groups of top connecting holes 13121 are arranged at an included angle. Correspondingly, centers of the plurality of second connecting holes 1331 are located on the axis of the second intermediate sleeve 132, so that when the first core rod 110 is mounted in the second intermediate sleeve 132, and after the top connecting plates 1312 are respectively in matched connection with the two second intermediate sleeves 132 through the two second intermediate connecting portions 133, the two first core rods 110 can directly form the inverted V-shaped structure, the mounting operation is simple, and the efficiency is high. During mounting, the two top connecting plates 1312 are clamped on two sides of the two second intermediate connecting portions 133, and after the two groups of top connecting holes 13121 on each top connecting plate 1312 are respectively matched with and aligned with the plurality of second connecting holes 1331 in the two second intermediate connecting portions 133, fasteners such as bolts and screws are inserted in such connecting holes and tightened, so that the top connecting portion 131 is connected to the second intermediate sleeve 132. In other embodiments, the top connecting hole and the second connecting hole may be arranged in other manners as long as they can be in matched connection to cause the whole first crossarm to be of the inverted V-shaped structure, which is not limited herein.

Further, the top connecting plate 1312 is substantially of a triangular structure, and the two groups of top connecting holes 13121 are respectively arranged at two side edges of the top connecting plate 1312, as such, unnecessary material waste can be saved, the weight of the top connecting portion 131 can be further reduced, and the costs can be reduced.

At least one top connecting plate 1312 is provided with the first attaching portion 1311, and the structure of the first attaching portion 1311 is described as above and will not be repeated here. In an embodiment, one first attaching portion 1311 is provided, and when the first attaching portion 1311 is of the wire attaching plate structure, the wire attaching plate may be directly arranged at the middle portion of the bottom side of one of the top connecting plates 1312 in an extending mode to attach the suspension clamp 12; when the first attaching portion 1311 is of the attaching hole structure, the attaching hole can be directly arranged at the middle portion of the bottom side of one of the top connecting plates 1312 to attach the suspension clamp 12, and a cavity is correspondingly arranged in the other of the top connecting plates 1312 to avoid interference with the first attaching portion 1311 attaching the conductor. In another embodiment, two first attaching portions 1311 are provided. No matter what structure the first attaching portions 1311 have, the first attaching portions 1311 on the two top connecting plates 1312 are correspondingly arranged, and the suspension clamp 12 is attached by cooperation of the two first attaching portions 1311, so that connecting strength between the suspension clamp 12 and the two first attaching portions 1311 can be further improved, and the overall mechanical strength of the first crossarm 100 can be improved.

Further, the first crossarm 100 may have a symmetrical inverted V-shaped structure, that is, the two second intermediate sleeves 132 are symmetrically and obliquely arranged on the two sides of the top connecting portion 131, so that when the two first core rods 110 are respectively mounted in the two second intermediate sleeves 132, the two first core rods 110 may be symmetrically and obliquely connected on two sides of the second intermediate fitting 130, respectively, and therefore, the whole first crossarm 100 is of a symmetrical structure, so that horizontal heights of the conductors attached to the two ends of the first crossarm 100 are equal, and distances between the conductors attached to the two ends and the conductor attached to the top of the first crossarm 100 in a vertical direction are equal, as such, stressing of the first crossarm 100 is more balanced, and the structure is more stable.

The included angle of a V-shaped opening of the first crossarm 100 may be specifically designed according to the insulating requirements of the composite crossarm 10 in different application scenarios, and this can be achieved by just correspondingly adjusting the connecting angle between the top connecting portion 131 and the two second intermediate sleeves 132, which can be realized by replacing different second intermediate fittings 130 or by providing multiple groups of the top connecting holes 13121 at different angles in the top connecting plates 1312, which is not limited herein.

As shown in FIG. 2 and FIG. 7 to FIG. 9 together, the end fitting 140 includes an end sleeve 141 and a second attaching portion 142 that are connected to each other. The end sleeve 141 is configured to be connected to the other end of the first core rod 110, and the second attaching portion 142 is configured to attach the conductor directly or attach the conductor through a clamp.

In an embodiment, as shown in FIG. 8, the end fitting 140 is a cap fitting, and can directly attach the conductor. The end fitting 140 includes an end sleeve 141 and a second attaching portion 142 that are connected to each other. The end sleeve 141 is sleeved an outer periphery of an end portion of the first core rod 110, the end sleeve 141 is of a tubular structure with a closed end, and a shape and size of a cross-section of the end sleeve 141 are matched with those of the cross-section of the first core rod 110; and the second attaching portion 142 includes a base 1421, a cap 1422, and two tabs 1423. The base 1421 seals an end portion of the end sleeve 141 not connected to the first core rod 110. The base 1421 is provided with a first groove 14211. The first groove 14211 is an arc-shaped groove configured for receiving the conductor. The base 1421 is provided with two mounting holes, and the two mounting holes are respectively located on two sides of the first groove 14211 and configured to be in matched connection with the cap 1422. The bottom of the cap 1422 is provided with a second groove 14221. The second groove 14221 is also an arc-shaped groove configured for assisting in fixing the conductor. Arrangement directions of the first groove 14211 and the second groove 14221 are both perpendicular to an axial direction of the first core rod 110, and the first groove 14211 and the second groove 14221 cooperate to facilitate stable attachment of the conductor. The two tabs 1423 are respectively connected to two sides of the cap 1422, and the two tabs 1423 are located on two sides of the axial direction of the second groove 14221. The tab 1423 is provided with mounting holes. The mounting holes on the two tabs 1423 and the mounting holes on the base 1421 are correspondingly arranged, so that the tabs 1423 can be in tightened connection with the base 1421 through fasteners such as bolts and screws, and then, the cap 1422 can tightly press and fix the conductor. During mounting the conductor, the conductor is placed in the first groove 14211, the cap 1422 is arranged above the conductor, so that the second groove 14221 is attached to the top of the conductor and tightly presses the conductor, and the fasteners are then correspondingly inserted into the mounting holes on the tabs 1423 and the base 1421 and screwed tightly for fixation, to fixedly connect the cap 1422 to the base 1421, thereby stably attaching the conductor on the end fitting 140.

Further, the bottom of the second attaching portion 142 is provided with a hoisting portion 143. The hoisting portion 143 is provided with a hoisting hole 1431 for meeting a hoisting requirement, that is, for hoisting and mounting the first crossarm 100 through tools such as ropes. A width of the hoisting portion 143 in the conductor extension direction is less than a width of the end sleeve 141, which can reduce the weight of the end fitting 140 and reduce costs while ensuring the wire attaching effect.

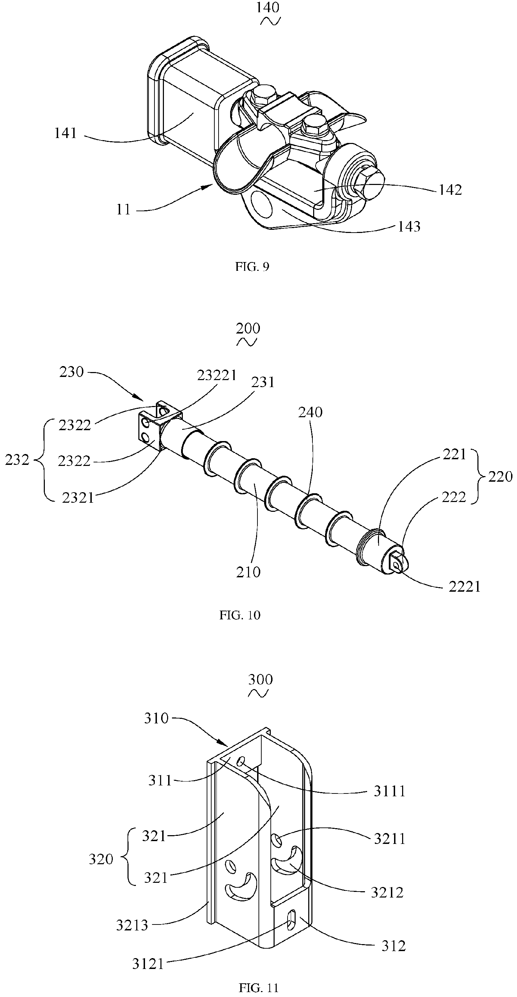

In another embodiment, as shown in FIG. 9, the end fitting 140 is a groove-type clamp fitting, and the conductor can be attached through a support clamp 11. The end fitting 140 includes an end sleeve 141 and a second attaching portion 142 that are connected to each other. The configuration of the end sleeve 141 is as described above and will not be repeated here. The second attaching portion 142 is a groove structure, the groove structure seals an end portion of the end sleeve 141 not connected to the first core rod 110. The groove structure is a U-shaped groove, a groove opening of the U-shaped groove faces upwards, and mounting holes are correspondingly arranged on two side walls of the U-shaped groove and configured for the mounting of the support clamp 11 through fasteners such as bolts and screws, so as to attach the conductor. The support clamp 11 includes a clamp base and a clamp cover. An arc-shaped groove is arranged on the clamp base and configured to receive the conductor. An arc-shaped groove is correspondingly arranged on the bottom of the clamp cover and configured to assist in fixing the conductor. Mounting holes are correspondingly arranged on two sides of the arc-shaped groove of the clamp base and two sides of the arc-shaped groove of the clamp cover, and are configured to tightly press and fix the conductor between the clamp base and the clamp cover through fasteners such as bolts and screws. Mounting holes are also arranged on two ends of the clamp base and configured to be fixedly connected to the two side walls of the U-shaped groove. During mounting the conductor, the conductor is first fixed on the support clamp 11, that is, the conductor is placed in the arc-shaped groove of the clamp base, the clamp cover is tightly pressed and fixed on the clamp base, the support clamp 11 is then placed in the groove structure of the end fitting 140, and after the mounting holes on the two ends of the clamp base are aligned with the mounting holes on the two side walls of the U-shaped groove, the fasteners are inserted into these mounting holes to fix the support clamp 11 in the groove structure, thereby stably attaching the conductor on the end fitting 140. The bottom of the second attaching portion 142 is provided with a hoisting portion 143. The configuration and usage of the hoisting portion 143 are as described above and will not be repeated. The support clamp 11 is of a clamp structure of the prior art, and which is not limited herein.

In still another embodiment, as shown in FIG. 2 and FIG. 7, the end fitting 140 is a platetype clamp fitting, and the conductor may be attached through a suspension clamp 12. The end fitting 140 includes an end sleeve 141 and a second attaching portion 142 that are connected to each other, and the configuration of the end sleeve 141 is as described above and will not be repeated here. The second attaching portion 142 is a plate member structure, the plate member structure includes an end plate and a wire attaching plate that are perpendicularly connected. The end plate seals an end portion of the end sleeve 141 not connected to the first core rod 110. The wire attaching plate perpendicularly extends outwardly from a side of the end plate away from the end sleeve 141. A mounting hole is arranged on the wire attaching plate and configured for the mounting of the suspension clamp 12 through an assembly such as a shackle, so as to attach the conductor. During mounting the conductor, the conductor is first fixed on the suspension clamp 12, the suspension clamp 12 and the shackle are then assembled, and the shackle is then clamped on both sides of the wire attaching plate of the end fitting 140, and after mounting holes on the shackle is aligned with the mounting hole on the wire attaching plate, fasteners such as bolts and screws are inserted into such mounting holes to attach the suspension clamp 12 on the wire attaching plate, thereby stably attaching the conductor on the end fitting 140. A width of the wire attaching plate in a conductor extension direction is less than a width of the end sleeve 131, which can reduce the weight of the end fitting 140 and reduce costs while ensuring the wire attaching effect. The suspension clamp 12 is of a clamp structure in the prior art, and which is not limited herein.

In other embodiments, the end fitting may also use an existing fitting structure as long as it can be configured to attach the conductor, which is not specifically limited herein.

As shown in FIG. 1 and FIG. 10, the second crossarm 200 includes a second core rod 210 (the reference numeral in figures is only for illustration), a first fitting 220, a second fitting 230, and a second insulating layer 240. The first fitting 220 is connected to one end of the second core rod 210 and the middle portion of the first crossarm 100; the second fitting 230 is connected to the other end of the second core rod 210 and the connecting fitting 300; and the second insulating layer 240 covers at least a part of an outer periphery surface of the second core rod 210.

The first fitting 220 includes a first sleeve 221 and a first connecting portion 222 that are connected to each other. One end of the first sleeve 221 is connected to one end of the second core rod 210, for example, the first sleeve 221 can be connected to the second core rod 210 through a crimping process; the first connecting portion 222 is configured to be connected to the middle portion of the first crossarm 100. The first connecting portion 222 is of a plate-shaped structure. The first connecting portion 222 is provided with a third connecting hole 2221 configured for a matched connection with the first connecting hole 1221 on the first intermediate connecting portion 122, so as to assemble the first crossarm 100 and the second crossarm 200. During mounting, the first connecting portion 222 and the first intermediate connecting portion 122 are closely attached to each other, and after the third connecting hole 2221 and the first connecting hole 1221 are aligned with each other, fasteners such as bolts and screws are inserted in the third connecting hole 2221 and the first connecting hole 1221 and tightened, so as to connect the first connecting portion 222 and the first intermediate connecting portion 122 together, thereby connecting one end of the second crossarm 200 to the middle portion of the first crossarm 100.

The second fitting 230 includes a second sleeve 231 and a second connecting portion 232 that are connected to each other. One end of the second sleeve 231 is connected to the other end of the second core rod 210, for example, the second sleeve 231 may be connected to the second core rod 210 through a crimping process; the second connecting portion 232 is configured to be connected to the connecting fitting 300, so as to connect the second crossarm 200 to the electric pole 20. The second connecting portion 232 includes a first connecting plate 2321 and two second connecting plates 2322. The first connecting plate 2321 seals an end portion of the second sleeve 231 not connected to the second core rod 210. The two second connecting plates 2322 are respectively connected to two ends of the first connecting plate 2321 perpendicularly. The two second connecting plates 2322 respectively extend from two ends of the first connecting plate 2321 in a same direction away from the second sleeve 231, so that the second connecting portion 232 is of a transverse U-shaped structure. Each second connecting plate 2322 is provided with two groups of fourth connecting holes 23221. The fourth connecting holes 23221 on the two second connecting plates 2322 are correspondingly arranged and configured to be in matched connection to the connecting fitting 300 through fasteners such as bolts and screws, that is, holes do not need to be drilled in the second sleeve 231 and the second core rod 210 for connection, thus avoiding the mechanical properties of the second core rod 210 from being affected by drilling holes, thereby avoiding potential electric-power safety hazards.

As shown in FIG. 1, and FIG. 10 to FIG. 12, the connecting fitting 300 is an adjustable fitting. The connecting fitting 300 includes an electric pole connecting portion 310 and a crossarm connecting portion 320 that connected to each other. The electric pole connecting portion 310 is connected to the electric pole 20. The crossarm connecting portion 320 is connected to the other end of the second crossarm 200. An angle between the second crossarm 200 and the electric pole 20 is adjustable.

In an embodiment, a cross-section of the electric pole 20 is square, and the electric pole connecting portion 310 is correspondingly configured to be of a plate-shaped structure, so that a contact area between the electric pole connecting portion 310 and the electric pole 20 can be increased, and reliable connection between the electric pole connecting portion 310 and the electric pole 20 is ensured. The electric pole connecting portion 310 includes a first plate member 311. The first plate member 311 is provided with a first electric pole connecting hole 3111, so that the first plate member 311 can abut against and be fixed on the electric pole 20 through fasteners such as bolts and screws.

The crossarm connecting portion 320 includes two second plate members 321. The second plate members 321 are substantially of rectangular structures. One end of each of the two second plate members 321 is perpendicularly connected to one of two ends of the first plate member 311. The two second plate members 321 respectively extend from the two ends of the first plate member 311 in a same direction away from the first plate member 311. A distance between plate surfaces of the two second plate members 321 adjacent to each other is slightly greater than a distance between plate surfaces of the two second connecting plates 2322 of the second connecting portion 232 of the second fitting 230 away from each other. In this way, on the one hand, the second connecting portion 232 can move between the two second plate members 321, so that the angle between the second crossarm 200 and the electric pole 20 can be conveniently adjusted; on the other hand, the two second plate members 321 can clamp and fix the two second connecting plates 2322 by fasteners such as bolts and screws, thus ensuring that the connection between the second crossarm 200 and the electric pole 20 is reliable. The second plate member 321 is provided with a fixing hole 3211 and an adjusting hole 3212. The fixing hole 3211 is a circular through hole, the adjusting hole 3212 is an arc-shaped hole. The circular arc of the adjusting hole 3212 and the fixing hole 3211 are concentrically arranged, and the adjusting hole 3212 and the fixing hole 3211 cooperate with each other to enable the second crossarm 200 to rotate with the fixing hole 3211 as a center, so as to adjust the angle between the second crossarm 200 and the electric pole 20 and fixedly connect the second crossarm 200 and the connecting fitting 300. The fixing hole 3211 and the adjusting hole 3212 on each second plate member 321 are respectively arranged corresponding to the two groups of fourth connecting holes 23221 on each second connecting plate 2322, so as to adjust the angle between the second crossarm 200 and the electric pole 20 and fixedly connect the second crossarm 200 and the connecting fitting 300, and further adjust the angle between the second crossarm 200 and the electric pole 20 according to design requirements, the mounting is flexible, and the connection is reliable; and an independent structure of the fitting enables the fitting to be suitable for the mounting of the composite crossarms 10 with different length specifications, and an application range is wider.

In an embodiment, as shown in FIG. 11, a length of the first plate member 311 in a length direction of the electric pole 20 is less than a length of a side of the second plate member 321 adjacent to the electric pole 20. The first plate member 311 is connected to an upper portion of the second plate member 321. The fixing hole 3211 and the adjusting hole 3212 are located in the middle portion of the second plate member 321, that is, the fixing hole 3211 and the adjusting hole 3212 are located below the first electric pole connecting hole 3111, thus preventing the fasteners between the electric pole connecting portion 310 and the electric pole 20 from affecting rotation adjustment of the angle between the second crossarm 200 and the electric pole 20, while reducing material usage amount of the connecting fitting 300, and reducing manufacturing costs.

When the connecting fitting 300 is mounted, the first plate member 311 of the electric pole connecting portion 310 is first attached to the electric pole 20, and after the first electric pole connecting hole 3111 on the first plate member 311 is aligned with the mounting hole on the electric pole 20, the fasteners such as the bolts and the screws are inserted in the first electric pole connecting hole 3111 and the mounting hole and tightened to fix the connecting fitting 300 onto the electric pole 20. When the second crossarm 200 is mounted, the second connecting portion 232 is placed between the two second plate members 321, the fixing hole 3211, the adjusting hole 3212, and the two groups of fourth connecting holes 23221 of the second connecting portion 232 are aligned, and the fasteners such as the bolts and the screws are inserted into the corresponding fixing holes 3211 and fourth connecting holes 23221 as well as the corresponding adjusting holes 3212 and fourth connecting holes 23221 for pre-fixing. That is, the approximate positions of the second connecting portion 232 and the crossarm connecting portion 320 are limited without affecting the rotation of the second connecting portion 232 in the crossarm connecting portion 320, and in this case, the second crossarm 200 can rotate with the fixing holes 3211 as centers. That is, when the second crossarm 200 rotates, positions of the fasteners in the fixing holes 3211 are kept unchanged, the fasteners in the adjusting holes 3212 slide in the adjusting holes 3212 for adjustment, with the fixing holes 3211 as the centers. After the angle between the second crossarm 200 and the electric pole 20 is adjusted to a predetermined angle, the fasteners are tightened to fixedly connect the second crossarm 200 to the electric pole 20. In other embodiments, after the connecting fitting is fixed on the electric pole, the fasteners may only be inserted into the corresponding fixing holes and fourth connecting holes for pre-fixing, and after the second crossarm is adjusted in position, the fasteners are tightened, and the fasteners are inserted into the corresponding adjusting holes and fourth connecting holes and tightened, so as to fixedly connect the second crossarm to the electric pole, which is not specifically limited herein.

Further, in order to make the connection between the connecting fitting 300 and the electric pole 20 more stable, the electric pole connecting portion 310 further includes a third plate member 312. Two ends of the third plate member 312 are respectively connected to the other ends of the two second plate members 321 not connected to the first plate member 311, so that the first plate member 311 and the third plate member 312 are respectively located on two sides of the second plate member 321. A length of the third plate member 312 in the length direction of the electric pole 20 is less than a length of the second plate member 321. The third plate member 312 is connected to a lower portion of the second plate member 321. The third plate member 312 is provided with a second electric pole connecting hole 3121 for further fixing the connecting fitting 300 on the electric pole 20 through fasteners such as bolts and screws. Due to the arrangement of the third plate member 312, on the one hand, upper and lower ends of the connecting fitting 300 can be simultaneously fastened to the electric pole 20 respectively through the first plate member 311 and the third plate member 312, so that stress between the connecting fitting 300 and the electric pole 20 is more uniform, and the connection is more reliable; on the other hand, by arranging the third plate member 312 at the end of the second plate member 321 away from the electric pole 20, interference between the fasteners on the third plate member 312 and the fasteners on the second plate member 321 during mounting can be avoided.

In another embodiment, the length of the first plate member 311 in the length direction of the electric pole 20 is equal to the length of the side of the second plate member 321 adjacent to the electric pole 20, in this way, the contact area between the electric pole connecting portion 310 and the electric pole 20 can be increased, the connection between the electric pole connecting portion 310 and the electric pole 20 is more reliable. In addition, the second plate member 321 may also be substantially of a right trapezoid structure, that is, a lower edge of the second plate member 321 is horizontally arranged, and an upper edge of the second plate member 321 is inclined downwardly from an upper end of the first plate member 311 towards an upper end of the third plate member 312. As such, the material usage amount can be reduced to reduce the manufacturing costs while ensuring the connecting strength of the connecting fitting 300. A specific shape of the upper edge of the second plate member 321 can be adjusted according to positions of the fixing hole 3211 and the adjusting hole 3212, as long as mounting of the second crossarm 200 is not affected, and which is not specifically limited herein.

When the length of the first plate member 311 is less than the length of the side of the second plate member 321 adjacent to the electric pole 20, and the first plate member 311 is located on the upper portion of the second plate member 321, a lower portion of the connecting fitting 300 adjacent to the electric pole 20 is of a hollow structure. During mounting, the connecting fitting 300 is first connected to the electric pole 20 through the first plate member 311, the second crossarm 200 is then mounted and adjusted in position, and the fasteners such as the bolts and the screws are inserted into the second electric pole connecting hole 3121 in the third plate member 312 and the mounting hole on the electric pole 20, and tightened, so as to further fix the connecting fitting 300 on the electric pole 20. When the length of the first plate member 311 is equal to the length of the side of the second plate member 321 adjacent to the electric pole 20, a lower portion of the first plate member 311 is provided with a third electric pole connecting hole (not shown in the drawing) corresponding to the second electric pole connecting hole 3121. During mounting, the third plate member 312 can be connected to the electric pole 20 by inserting the fasteners such as bolts and screws into the second electric pole connecting hole 3121, the third electric pole connecting hole, and the mounting hole of the electric pole 20, and other steps are as described above.

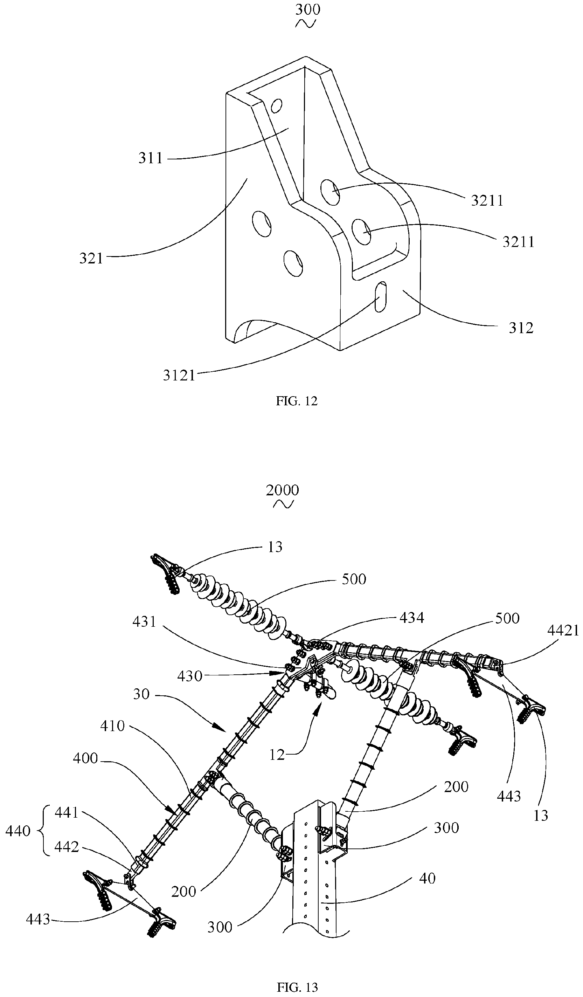

Further, as shown in FIG. 12, when the length of the first plate member 311 is equal to the length of the side of the second plate member 321 adjacent to the electric pole 20, in order to make the connection between the connecting fitting 300 and the electric pole 20 more reliable, the lower portion of the first plate member 311 is further provided with a fourth electric pole connecting hole (not shown in the drawing), the fourth electric pole connecting hole is located below the third electric pole connecting hole. In this case, the third plate member 312 is located in the middle portion of the second plate member 321. During mounting, the first plate member 311 can be further connected to the electric pole 20 by inserting fasteners such as bolts and screws into the fourth electric pole connecting hole and the mounting hole of the electric pole 20, and other steps are as described above. The lower edge of the second plate member 321 is inclined upwardly from a lower end of the first plate member 311 towards a lower end of the third plate member 312. In this way, the material usage amount can be reduced to reduce the manufacturing costs while ensuring the connecting strength of the connecting fitting 300. A specific shape of the lower edge of the second plate member 321 can be adjusted according to actual mounting requirements, which is not specifically limited herein.

In another embodiment, with continued reference to FIG. 12, the connecting fitting 300 is a fixed fitting and has a basic structure similar to the aforementioned adjustable fitting, except that the second plate member 321 of the connecting fitting 300 is not provided with the adjusting hole 3212, and is provided with two fixing holes 3211. The fixing holes 3211 on the second plate member 321 and the fourth connecting holes 23221 on the second connecting plate 2322 are correspondingly arranged. The connecting fitting 300 and the second crossarm 200 can be fixedly connected to each other through fasteners such as bolts and screws, so that the connection between the connecting fitting 300 and the second crossarm 200 is more reliable. Relative positions of the two fixing holes 3211 on the second plate member 321 can be adjusted according to the mounting requirements of the second crossarm 200, which are not specifically limited herein.

Further, with continued reference to FIG. 11, each of the two second plate members 321 is provided with a flanging 3213. The flanging 3213 perpendicularly extends from the side of the second plate member 321 adjacent to the electric pole 20 in a direction away from the first plate member 311. The two flangings 3213 and the first plate member 311 are located in a same plane. The arrangement of the flangings 3213 can increase a contact area between the connecting fitting 300 and the electric pole 20 to make the stress between the connecting fitting 300 and the electric pole 20 more uniform and the connection between the connecting fitting 300 and the electric pole 20 more reliable.

Referring to FIG. 1 to FIG. 12 together, in an embodiment, the first core rod 110 and the second core rod 210 are made of composite materials, for example, formed by impregnating glass fibers or aramid fibers with epoxy resin and then subjecting impregnated glass fibers or aramid fibers to pultrusion. Compared with metal materials of conventional crossarms, the composite materials are more corrosion-resistant, have lower costs, and can realize a great reduction in weight, so that the composite crossarm 10 is convenient to mount.

In an embodiment, the first core rod 110 has a square cross-section, and the second core rod 210 has a circular cross-section, so that the composite crossarm 10 has good overall structural strength, a simple structure, and low costs. In other embodiments, the cross-sections of the first core rod and the second core rod may be triangular, T-shaped, or L-shaped as long as the configuration of each core rod meets a strength requirement; the core rods may have different configurations or the same configuration, for example, the cross-section of the first core rod is triangular, the cross-section of the second core rod is square, alternatively, the cross-sections of the core rods are all square or circular, or the like, which is not specifically limited herein.

In an embodiment, the shapes and sizes of the cross-sections of the fitting sleeves on each core rod are matched with those of the cross-section of the corresponding core rod. That is, the shapes and sizes of the cross-sections of the first intermediate sleeve 121, the second intermediate sleeve 132, and the end sleeve 141 are matched with those of the cross-section of the first core rod 110, and the shapes and sizes of the cross-sections of the first sleeve 221 and the second sleeve 231 are matched with those of the cross-section of the second core rod 210, so that each sleeve is fixed on the corresponding core rod, the contact area between each sleeve and the corresponding core rod can be increased, and the connection strength between each fitting and the corresponding core rod is ensured.

In an embodiment, each fitting is formed in such a way that the fitting assemblies are separately formed and then connected together by welding, so that the connection is reliable, and the manufacturing is simple and convenient. In other embodiments, each fitting may be integrally formed by casting, or the like, as long as the connecting strength between the assemblies can be guaranteed, which is not specifically limited herein.

In an embodiment, the first insulating layer 150 and the second insulating layer 240 both include sheaths. The sheath of the first insulating layer 150 is hermetically connected to the first intermediate fitting 120 that is in the middle portion of the first core rod 110, the second intermediate fitting 130, and the end fittings 140 at two ends, and the sheath of the second insulating layer 240 is hermetically connected to the first fitting 220 and the second fitting 230 at two ends of the second core rod 210, so that external moisture can be effectively prevented from invading and damaging the first core rod 110 and the second core rod 210, and a service life of the composite crossarm 10 is prevented from being affected.

Further, each of the first insulating layer 150 and the second insulating layer 240 may further include sheds spaced apart on the sheath. The arrangement of the sheds may increase creepage distances of outer surfaces of the first crossarm 100 and the second crossarm 200, so that the composite crossarm 10 has a sufficient dry arcing distance. In addition, the arrangement of the sheds may also prevent birds from nesting, thereby improving electrical safety of the whole composite crossarm 10.

In an embodiment, the first insulating layer 150 and the second insulating layer 240 are both made of high-temperature vulcanized silicone rubber. A silicone rubber material is coated on outer peripheries of the first core rod 110 and the second core rod 210 by an integral vacuum injection molding process, to overall form the high-temperature vulcanized silicone rubber insulating layers. The high-temperature vulcanized silicone rubber has good aging resistance and hydrophobic migration property, and can reduce pollution flashover probability and rain flashover probability, and improve the electrical safety of the composite crossarm 10. In other embodiments, the first insulating layer and the second insulating layer may alternatively be formed by a mold pressing process or may be pre-formed and then be sleeved on the outer periphery of the corresponding core rod, which is not specifically limited herein.

In the present application, the overall length of the composite crossarm 10, lengths of the first crossarm 100 and the second crossarm 200, specifications of the support clamp 11 and the suspension clamp 12, or the like, can be correspondingly adjusted according to requirements; and a mounting order of the composite crossarm 10 can also be adjusted correspondingly according to requirements. That is, the first crossarm 100 can be fixed after the two second crossarms 200 are fixed on the electric pole 20 through the connecting fittings 300, or the first crossarm 100, the two second crossarms 200, and the connecting fittings 300 can be assembled, and then mounted on the electric pole 20 to be adjusted and fixed, which is not specifically limited herein.

In another application scenario, as shown in FIG. 13 to FIG. 15, the present application further provides a power transmission pole 2000. The power transmission pole 2000 is a tension pole, the tension pole includes a composite crossarm 30 and an electric pole 40. The composite crossarm 30 is fixed on the electric pole 40. In the electrical power system, the tension pole is a support for segmenting a line to control the extent within which the pole falls and the conductor is broken; and in the tension pole, tension assemblies and tension clamps are arranged on the crossarm to attach conductors.

The composite crossarm 30 includes a first crossarm 400, two second crossarms 200, two connecting fittings 300, and two tension assemblies 500. The configuration of the composite crossarm 30 is basically similar to that of the composite crossarm 10, except that two ends of the first crossarm 400 are configured to be connected to the tension clamps 13 to attach the conductors; and one end of each of the two tension assemblies 500 is connected to one of two sides of the top of the first crossarm 400, the other ends of the tension assemblies 500 are configured to be connected to the tension clamps 13 to attach the conductors, A length direction of the tension assembly 500 is perpendicular to a vertical plane where the first crossarm 400 is located.

A second intermediate fitting 430 of the first crossarm 400 further includes two tension connecting portions 434. The two tension connecting portions 434 are arranged on a top side of a top connecting portion 431 and symmetrical with respect to the vertical plane where the first crossarm 400 is located. The tension connecting portions 434 are configured to be connected to the tension assemblies 500.

In an embodiment, as shown in FIG. 13, the tension connecting portion 434 is of a plate-shaped structure, the tension connecting portion 434 is provided with a tension connecting hole configured for connecting the tension assembly 500 through a connecting assembly such as an eye, and in this case, the tension assembly 500 may be a tension insulator.

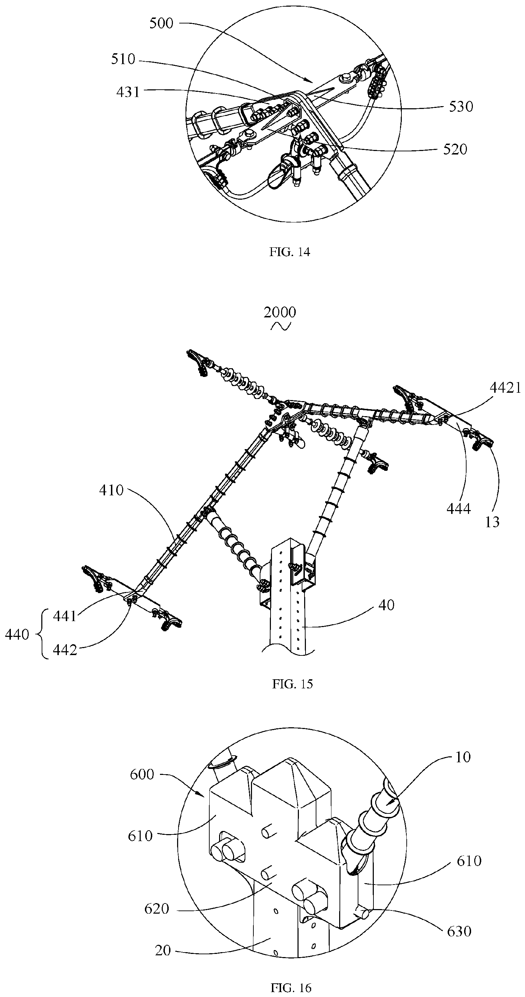

In another embodiment, as shown in FIG. 14, when the top connecting portion 431 includes two top connecting plates, the tension connecting portion 434 may alternatively be a tension connecting hole arranged at a top side of the top connecting plate and configured to connect the tension assembly 500 through fasteners such as bolts and nuts, and in this case, the tension assembly 500 may be a tension fitting. The whole tension fitting is of an L-shaped structure and includes a first connecting plate 510 and a second connecting plate 520 that are perpendicularly connected to each other. The first connecting plate 510 is configured to be in matched connection with the top connecting portion 431, and the second connecting plate 520 is configured to be connected to the tension clamp 13 through the connecting assembly such as an eye; the tension fitting further includes a reinforcing rib 530. The reinforcing rib 530 is perpendicularly connected to the first connecting plate 510 and the second connecting plate 520 at the same time, so that the mechanical strength of the tension fitting can be further improved.

A suspension clamp 12 is connected to a first attaching portion of the second intermediate fitting 430 and configured to attach a jumper. The jumper is led out, at the tension clamp 13, from the conductor attached to one of the tension assemblies 500, the jumper is first attached to the suspension clamp 12 and then attached to the tension clamp 13 of the other tension assembly 500 on the other side of the electric pole 40, and the jumper is electrically connected to the conductors on the two sides of the electric pole 40.

In an embodiment, as shown in FIG. 13, an end fitting 440 includes an end sleeve 441 and a second attaching portion 442. The second attaching portion 442 attaches the conductor, specifically through the tension clamp 13. The second attaching portion 442 is arranged on a side of the end sleeve 441 not connected to a first core rod 410. The second attaching portion 442 is of a plate-shaped structure, the second attaching portion 442 includes an end plate and a wire attaching plate 4421. The end plate seals an end portion of the end sleeve 441 not connected to the first core rod 410. The wire attaching plate 4421 perpendicularly extends outwardly from a side of the end plate away from the end sleeve 441. The wire attaching plate 4421 is provided with an attaching hole configured for attaching a triangular yoke plate 443 through a connecting assembly such as a shackle. Two clamp connecting holes are arranged on two ends of the bottom of the triangular yoke plate 443 and respectively configured to be connected to two tension clamps 13. The tension clamps 13 are attached by the triangular yoke plate 443 to attach the conductors. In this way, on the one hand, a distance between tension jumpers can be ensured, and then, the electrical safety of the composite crossarm 30 is ensured; on the other hand, certain rotatability can be provided. When longitudinal unbalanced tension forces occur on the conductors on two sides of the composite crossarm 30, the triangular yoke plate 443 and the tension clamps 13 can deflect, so that parameters such as a span length (horizontal distance between wire attaching points of two adjacent power transmission towers) of the conductors on two sides change, and then, when the triangular yoke plate 443 and the tension clamps 13 deflect to proper positions, the tension forces on the conductors on two sides reach a new balance, the unbalanced tension forces are released, stress on the composite crossarm 30 is reduced, and the service life of the composite crossarm 30 is prolonged.

In another embodiment, as shown in FIG. 15, the wire attaching plate 4421 of the second attaching portion 442 of the end fitting 440 extends obliquely outwardly from a side of the end plate away from the end sleeve 441. After the end fitting 440 is crimped on the end portion of the first core rod 410 and mounted on the electric pole 40, the wire attaching plate 4421 is horizontally arranged. The wire attaching plate 4421 is provided with a plurality of attaching holes configured for connecting the rectangular yoke plate 444. Two clamp connecting holes are formed on two ends of the rectangular yoke plate 444 and configured to be connected to two tension clamps 13 respectively, a specific connection manner thereof is as described above and will not be repeated. An area of a plate surface of the rectangular yoke plate 444 is less than that of the triangular yoke plate 443, so that materials can be saved, and the costs can be reduced. Further, a size of a cross-section of an end of the end sleeve 441 connected to the end plate is gradually reduced from the end portion of the first core rod 410 to the end plate, so that material consumption is less while the end sleeve is stably connected to the first core rod 410 and the end plate. Two ends of the rectangular yoke plate 444 can have trapezoidal or arc-shaped structures, so that material consumption is less while the rectangular yoke plate 444 meets a requirement for forming the attaching holes, and the costs are reduced.

The tension insulator can have a tension composite insulator structure in the prior art, the tension clamp 13 can have a clamp structure in the prior art; and the tension insulator and the tension clamp 13 can also be mounted by adopting manners in the prior art, which is not specifically limited herein.

Further, the composite crossarm 10 on the intermediate pole and the composite crossarm 30 on the tension pole can further include insulating protection covers 600, and the illustration is given below by taking the intermediate pole as an example. As shown in FIG. 16, the insulating protection cover 600 includes connecting fitting protection covers 610 and an electric pole protection cover 620. The connecting fitting protection cover 610 is configured to cover the connecting fitting 300, the electric pole protection cover 620 is configured to cover the top of the electric pole 20. The connecting fitting protection covers 610 and the electric pole protection cover 620 cooperate with each other to cover the metal structures at the top of the electric pole 20, so that an insulating effect at the top of the electric pole 20 is enhanced, and it is further avoided that the energized circuit is formed when the birds take off, stand on or land on the top of the electric pole 20 to cause the electric shock to the birds, thereby reducing the probability that the birds are subjected to the electric shock and die, protecting the biodiversity. The specific configuration is as described above and will not be repeated.

Further, a main structure of the insulating protection cover 600 is a cuboid structure with an opening in the bottom, so that the insulating protection cover 600 can be conveniently mounted for covering; and a plurality of cavities are arranged in the insulating protection cover 600 and configured for an insertion of portions of the second crossarm 200 or fasteners like bolts and nuts.

A main structure of the connecting fitting protection cover 610 is a cuboid structure with an opening in the bottom, a size of the cuboid is matched with the size of the connecting fitting 300, and a size of the opening in the bottom is matched with a size of a horizontal cross-section of the connecting fitting 300, so that the connecting fitting protection cover 610 can completely cover the connecting fitting 300 from top to bottom, and meanwhile, material costs are saved. The connecting fitting protection cover 610 is provided with a plurality of cavities, and one of the cavities is arranged corresponding to the second crossarm 200, that is, corresponding to a position where the second crossarm 200 extends out from the connecting fitting 300, and the other cavities are arranged corresponding to the mounting connecting holes of the composite crossarm 10 respectively, thus facilitating insertion of the fasteners and mounting of the composite crossarm 10 while guaranteeing an insulating effect.

A main structure of the electric pole protection cover 620 is a cuboid structure with an opening in the bottom, a size of the cuboid is matched with a size of the top of the electric pole 20, and a size of the opening in the bottom is matched with a size of a horizontal cross-section of the electric pole 20, so that material costs can be saved while the electric pole protection cover 620 covers the top of the electric pole 20 from top to bottom. The electric pole protection cover 620 is provided with a plurality of cavities that are arranged corresponding to the mounting holes of the electric pole 20 respectively, thus facilitating insertion of the fasteners and mounting of the composite crossarm 10 while guaranteeing an insulating effect.

Further, side surfaces of the connecting fitting protection covers 610 and the electric pole protection cover 620 that are adjacent to each other are correspondingly provided with side openings, and a size of the side opening is matched with a size of a vertical section of the connecting fitting 300 with a biggest area, so that the first plate member 311 can be closely attached to the electric pole 20 and mounted, thus guaranteeing the connecting strength between the connecting fitting 300 and the electric pole 20, and guaranteeing stable mounting of the composite crossarm 10.

Further, the tops of the connecting fitting protection covers 610 and the top of the electric pole protection cover 620 are of pinnacle structures, and the tips of the pinnacle structures face upwards, so that after each protection cover is mounted, the pinnacle structures can prevent the birds from standing and staying at the top of the electric pole 20 and the tops of the connecting fittings 300, thus further reducing the probability of electric shock death of the birds to protect the biodiversity. The pinnacle structures can be cone or pyramid structures, and thus are simple and convenient to manufacture.

Further, the insulating protection cover 600 further includes fastener protection covers 630 configured for covering fasteners such as nuts required to be inserted during mounting of the connecting fittings 300 and the electric pole 20, which further increase a covering rate of the metal structures at the top of the electric pole 20, thereby further enhancing the insulating effect at the top of the electric pole 20.

The insulating protection cover 600 is made of silicone rubber, which has excellent insulating property and can ensure the insulating effect of the insulating protection cover 600, or the insulating protection cover can be made of other insulating materials, which is not specifically limited herein.

In an embodiment, the insulating protection cover 600 is of a split structure. That is, each protection cover is manufactured and mounted separately. Further, the connecting fitting protection covers 610 and the electric pole protection cover 620 as a whole can include two sub-protection covers. That is, the two sub-protection covers are manufactured separately and mounted in a butt-joint mode to cover the connecting fittings 300 and the top of the electric pole 20, and the fastener protection covers 630 are manufactured and mounted separately, so that mounting of the insulating protection cover 600 is simpler and more convenient, and operation efficiency is higher. In other embodiments, the insulating protection cover may also be of an integral structure as long as it can be mounted on the top of the electric pole and the connecting fittings to achieve the insulating function, which is not specifically limited herein.

The technical contents and technical characteristics of the present application have been disclosed above, but it may be understood that under the creative idea of the present application, those skilled in the art may make various changes and improvements to the above structures and materials, including combinations of technical features herein separately disclosed or claimed, and obviously including other combinations of these features. Such modifications and/or combinations are within the technical field to which the application pertains and are within the protection scope claimed by claims of the present application.

## Claims

1. A composite crossarm, comprising:
a first crossarm, the first crossarm being of an inverted V-shaped structure, and a top and two ends of the first crossarm being respectively configured to attach conductors;
two second crossarms, each of which has one end connected to a middle portion of the first crossarm, the other end configured to be connected to an electric pole, wherein a length direction of each of the second crossarms is obliquely arranged, the second crossarms are arranged below the first crossarm; and the second crossarms and the first crossarm are located in a same vertical plane; and
two connecting fittings, the other ends of the two second crossarms being connected to two sides of the electric pole through the two connecting fittings respectively.

2. The composite crossarm according to claim 1, wherein the first crossarm comprises:
two first core rods arranged at an included angle;
two first intermediate fittings respectively connected to the two second crossarms and middle portions of the two first core rods;
a second intermediate fitting, one end of each of the two first core rods being connected to one of two sides of the second intermediate fitting, and the second intermediate fitting being configured to attach the conductor;
two end fittings each of which being connected to the other end of one of the two first core rods, and the end fittings being configured to attach the conductors; and
a first insulating layer covering at least a part of an outer periphery surface of each of the first core rods.

3. The composite crossarm according to claim 2, wherein each of the first intermediate fittings comprises:
a first intermediate sleeve sleeved on the middle portion of the first core rod; and
a first intermediate connecting portion arranged on a bottom surface of the first intermediate sleeve, wherein the first intermediate connecting portion is configured to be connected to the second crossarm.

4. The composite crossarm according to claim 2, wherein the second intermediate fitting comprises:
a top connecting portion provided with a first attaching portion, and the first attaching portion being configured to attach the conductor through a clamp; and
two second intermediate sleeves, each of which being sleeved on the one end of one of the two first core rods, and the two second intermediate sleeves being respectively connected to two ends of the top connecting portion.

5. The composite crossarm according to claim 4, wherein the top connecting portion and the two second intermediate sleeves are of an integral structure.

6. The composite crossarm according to claim 4, wherein the top connecting portion is detachably connected to each of the second intermediate sleeves through a second intermediate connecting portion, wherein the second intermediate connecting portion is arranged at an end of the second intermediate sleeve not connected to the first core rod; and the top connecting portion comprises two top connecting plates, the two top connecting plates clamping and fixing the two second intermediate connecting portions, and at least one of the top connecting plates being provided with the first attaching portion.

7. The composite crossarm according to claim 2, wherein each of the end fittings comprises an end sleeve and a second attaching portion that are connected to each other, wherein the end sleeve is configured to be connected to the other end of the first core rod, and the second attaching portion is configured to attach the conductor.

8. The composite crossarm according to claim 7, wherein the second attaching portion comprises an end plate and a wire attaching plate, wherein the end plate seals an end portion of the end sleeve not connected to the first core rod, the wire attaching plate obliquely extends outwardly from a side of the end plate away from the end sleeve; and a sectional size of an end of the end sleeve connected to the end plate is gradually reduced from an end portion of the first core rod towards the end plate.

9. The composite crossarm according to claim 1, wherein each of the second crossarms comprises:
a second core rod;
a first fitting connected to one end of the second core rod and the middle portion of the first crossarm;
a second fitting connected to the other end of the second core rod and the connecting fitting; and
a second insulating layer covering at least a part of an outer periphery surface of the second core rod.

10. The composite crossarm according to claim 1, wherein each of the connecting fittings comprises an electric pole connecting portion and a crossarm connecting portion that are connected to each other, wherein the electric pole connecting portion is connected to the electric pole, and the crossarm connecting portion is connected to the other end of the second crossarm.

11. The composite crossarm according to claim 10, wherein the electric pole connecting portion comprises a first plate member abutting against and being fixed on the electric pole; and the crossarm connecting portion comprises two second plate members, the two second plate members being perpendicularly connected to two ends of the first plate member respectively, the two second plate members extending from the two ends of the first plate member in a same direction away from the first plate member, wherein each of the second plate member is provided with a fixing hole configured for fixedly connecting the connecting fitting to the second crossarm.

12. The composite crossarm according to claim 11, wherein each of the second plate members is further provided with an adjusting hole, wherein the fixing hole and the adjusting hole cooperate to cause an angle between the second crossarm and the electric pole to be adjustable, the fixing hole is a circular through hole, the adjusting hole is an arc-shaped hole, and an arc of the adjusting hole and the fixing hole are arranged concentrically.

13. The composite crossarm according to claim 11, wherein the electric pole connecting portion further comprises a third plate member configured to be in matched connection with the electric pole, wherein each of two ends of the third plate member is connected to the other end of one of the two second plate members not connected to the first plate member, and a length of the third plate member along a length direction of the electric pole is less than a length of each of the second plate members.

14. The composite crossarm according to claim 4, wherein the second intermediate fitting further comprises two tension connecting portions, wherein the two tension connecting portions are arranged on a top side of the top connecting portion and symmetrical with respect to a vertical plane where the first crossarm is located, and the tension connecting portions are configured to be connected to tension assemblies.

15. The composite crossarm according to claim 1, further comprising: an insulating protection cover, the insulating protection cover comprising connecting fitting protection covers configured to cover the connecting fittings, and an electric pole protection cover configured to cover a top of the electric pole.

16. A power transmission pole, comprising an electric pole and the composite crossarm according to any one of claims 1 to 15, the composite crossarm being fixed on the electric pole.
